# FASCICULE DE BREVET EUROPEEN

(11) **EP 3 403 872 B1**
(45) Date de publication et mention de la délivrance du brevet: **21.10.2020**
(21) Numéro de dépôt: 18171570.7
(22) Date de dépôt: 09.05.2018
(51) Int. Cl.: H02J 7/02, B60L 53/22

(54) **SYSTÈME DE CHARGEUR ÉLECTRIQUE POUR VÉHICULE ÉLECTRIQUE OU HYBRIDE**
LADESYSTEM FÜR EIN ELEKTRO- ODER HYBRIDFAHRZEUG
CHARGER SYSTEM FOR AN ELECTRIC OR HYBRID VEHICLE

(30) Priorité: 19.05.2017 FR 1754440
(43) Date de publication de la demande: 21.11.2018
(73) Titulaire: Valeo Siemens eAutomotive France SAS, 95800 Cergy (FR)
(72) Inventeur: BENDANI, Larbi, 60110 MERU (FR); CHELGHOUM, Reda, 78420 CARRIERES-SUR-SEINE (FR); SILVESTRE, Bénédicte, 78740 VAUX-SUR-SEINE (FR); CONDAMIN, Bruno, 95300 PONTOISE (FR); ASKEUR, Mimoun, 95490 VAUREAL (FR); DIALLO, Massourang, 93800 EPINAY SUR SEINE (FR)
(74) Mandataire: Argyma

(56) Documents cités:
- WO-A1-2014/112925
- FR-A1- 3 036 864
- KR-A- 20150 006 530
- US-A1- 2015 280 593

## Description

### DOMAINE TECHNIQUE ET OBJET DE L'INVENTION

De façon générale, l'invention concerne le domaine des véhicules automobiles, en particulier les véhicules électriques ou hybrides et vise, en particulier, un système de gestion de la charge des batteries d'alimentation basse et haute tension de tels véhicules.

Plus précisément, dans le contexte d'un véhicule électrique ou hybride comprenant une batterie d'alimentation basse tension, pour l'alimentation d'équipements, et une batterie d'alimentation haute tension, pour participer à la propulsion du véhicule, il est connu qu'un système de chargeur embarqué, couramment désigné par l'homme du métier sous l'acronyme OBC pour « On Board Charger » en anglais, signifiant « chargeur embarqué », soit mis en œuvre. La présente invention concerne, dans ce contexte, un système électrique formant un chargeur embarqué amélioré.

### ETAT DE LA TECHNIQUE

Comme cela est connu, un véhicule électrique ou hybride comprend un système de motorisation électrique alimenté par une batterie d'alimentation haute tension via un réseau électrique embarqué haute tension et une pluralité d'équipements électriques auxiliaires alimentés par une batterie d'alimentation basse tension via un réseau électrique embarqué basse tension. Ainsi, la batterie d'alimentation haute tension assure une fonction d'alimentation en énergie du système de motorisation électrique permettant la propulsion du véhicule. La batterie d'alimentation basse tension alimente des équipements électriques auxiliaires, tels que des calculateurs embarqués, des moteurs de lève-vitres, un système multimédia, etc. La batterie d'alimentation haute tension délivre typiquement 100 V à 900 V, de préférence de 100 V à 500 V, tandis que la batterie d'alimentation basse tension délivre typiquement 12 V, 24 V ou 48 V. Lesdites deux batteries d'alimentation haute et basse tension doivent pouvoir être chargées.

La recharge en énergie électrique de la batterie d'alimentation haute tension est réalisée en la connectant, via un réseau électrique haute tension du véhicule, à un réseau électrique externe, par exemple le réseau d'alimentation électrique alternatif domestique.

A cette fin, la batterie d'alimentation haute tension est ainsi apte à être connectée au réseau d'alimentation électrique alternatif domestique, pour sa charge, via un système de charge embarqué, désigné système OBC, comprenant principalement un convertisseur alternatif-continu composé d'un redresseur et d'un convertisseur continu-continu à correction de facteur de puissance, désigné convertisseur PFC (pour « Power Factor Correction » en anglais), et un convertisseur continu-continu de préférence isolé galvaniquement.

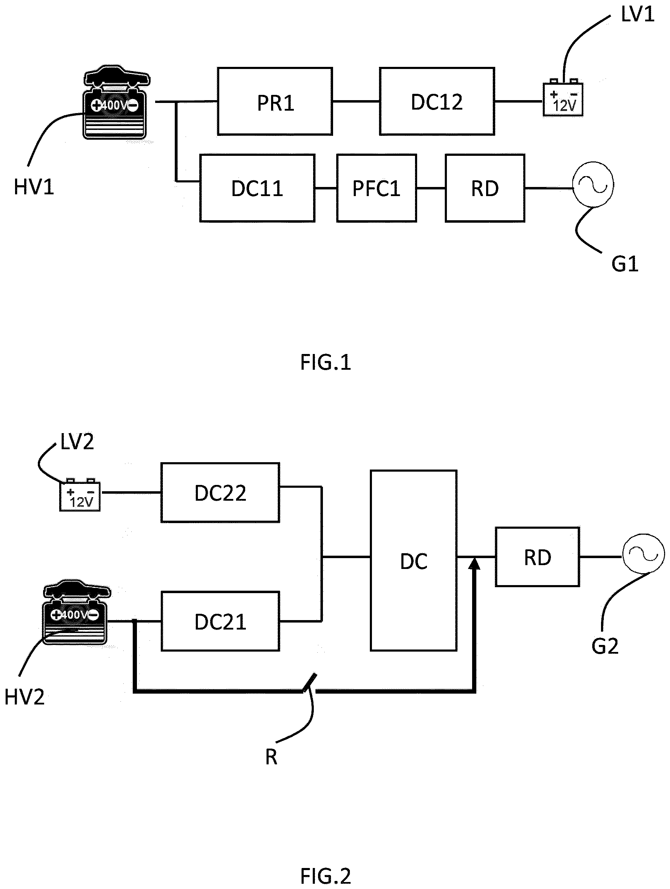

Dans un système OBC de ce type, en référence à la figure 1, le courant alternatif issu du réseau électrique alternatif domestique G1 est tout d'abord traité dans un convertisseur alternatif-continu, en étant transformé en courant continu par le redresseur RD avant d'être fourni en entrée du convertisseur PFC (PFC1).

Le convertisseur PFC, dans sa fonction de correction du facteur de puissance, a pour fonction principale d'éliminer les déformations du réseau électrique sur le courant absorbé pour éviter l'apparition de courants harmoniques néfastes au réseau électrique embarqué, en l'espèce principalement le réseau électrique haute tension. Le convertisseur PFC permet de mettre le courant et la tension d'entrée en phase.

Il est également connu de charger la batterie basse tension à l'aide de la batterie haute tension. La batterie haute tension est alors en outre reliée à la batterie basse tension via un pré-régulateur et un convertisseur continu-continu auxiliaire, ledit convertisseur continu-continu auxiliaire étant isolé galvaniquement. La basse tension délivrée par le convertisseur continu-continu auxiliaire alimente de ce fait le réseau électrique basse tension du véhicule.

Aujourd'hui, les fonctions de charge sont distinctes pour la batterie d'alimentation haute tension et pour la batterie d'alimentation basse tension, chaque fonction nécessitant la mise en œuvre de convertisseurs continu-continu et de pré-régulateurs respectivement dédiés.

Dans le but d'améliorer la compacité des systèmes OBC et pour limiter le nombre de composants nécessaires, une idée consiste à combiner des fonctions du système de chargeur embarqué.

Selon l'état de la technique, il est ainsi connu de disposer les composants des systèmes OBC dédiés respectivement à la charge de la batterie d'alimentation haute tension et de la batterie d'alimentation basse tension dans une même boîte. Il est connu également de faire en sorte que ces deux fonctions de charge des batteries partagent un même système de refroidissement, ou encore de mêmes filtres ou un même contrôleur électronique de commande.

Le document KR 20150006530 A décrit un système OBC comprenant un premier convertisseur qui redresse une tension d'entrée et délivre une première tension continue, et un second convertisseur qui contrôle le niveau de la première tension continue et en supprime le bruit en vue de charger une batterie.

Le document WO 2015/192133 décrit un exemple de système OBC pour véhicule électrique ou hybride. Le système OBC décrit dans le document WO 2015/192133 est isolé galvaniquement et le convertisseur PFC qu'il comporte est configuré pour maximiser la densité de puissance délivrée, en combinant des éléments résonnants et des composants magnétiques.

Ce document est représentatif de l'état de l'art et le système OBC décrit présente les inconvénients susvisés, relatifs en particulier à l'encombrement induit.

Pour pallier ces inconvénients, la présente invention propose d'exploiter le convertisseur PFC du convertisseur alternatif-continu transformant le courant alternatif issu du réseau électrique alternatif domestique en tension continue destinée au réseau d'alimentation électrique haute tension, à la fois durant la charge de la batterie d'alimentation haute tension et durant la charge de la batterie d'alimentation basse tension, c'est-à-dire en dehors de toute phase de charge de la batterie d'alimentation haute tension.

Par conséquent, selon l'invention, le convertisseur PFC assure une fonction de convertisseur PFC standard, régulant la tension délivrée, à partir de la tension issue du réseau électrique externe alternatif redressée, en vue de permettre la charge de la batterie haute tension, lorsque cette dernière est en charge, et assure par ailleurs une fonction de pré-régulation pour le convertisseur continu-continu auxiliaire alimentant la batterie basse tension lorsque la batterie haute tension n'est pas en charge.

### PRESENTATION GENERALE DE L'INVENTION

Plus précisément, l'invention vise un système électrique, notamment destiné à être embarqué dans un véhicule électrique ou hybride, ledit système électrique comprenant
un convertisseur alternatif-continu comportant un redresseur et un convertisseur continu-continu,
un convertisseur continu-continu isolé destiné à être relié à une batterie haute tension, et
ledit système électrique étant configuré pour, dans un premier mode de fonctionnement, être connecté à un réseau d'alimentation électrique externe alternatif pour charger la batterie haute tension, ledit redresseur délivrant une tension redressée au convertisseur continu-continu à partir du courant alternatif reçu du réseau d'alimentation électrique externe alternatif, ledit convertisseur continu-continu étant relié à la batterie haute tension via le convertisseur continu-continu isolé.

Ledit système électrique est remarquable en ce que :
des premières bornes d'interface du convertisseur continu-continu sont destinées à être reliées à une batterie basse tension, et en ce que
ledit système électrique est configuré pour que, dans un deuxième mode de fonctionnement, le système électrique étant déconnecté du réseau d'alimentation électrique externe alternatif, ledit convertisseur continu-continu délivre une première tension issue de la batterie haute tension de manière à alimenter la batterie basse tension.

Grâce au système électrique selon l'invention, le système OBC présente une meilleure compacité dans la mesure où le convertisseur continu-continu est utilisé dans une double fonction, permettant de s'affranchir de la présence d'un pré-régulateur dédié à la fonction de charge de la batterie basse tension.

De plus, le convertisseur continu-continu présente l'avantage de délivrer, en vue de son utilisation pour la charge de la batterie basse tension, dans le deuxième mode de fonctionnement, une première tension continue dépourvue de discontinuité de courant.

Selon un mode de réalisation, ledit système électrique comprend par ailleurs :
un convertisseur continu-continu auxiliaire destiné à être relié à la batterie basse tension, et dont l'entrée est reliée aux premières bornes d'interface du convertisseur continu-continu, et
dans lequel ledit système électrique est configuré pour que, dans le deuxième mode de fonctionnement, ledit convertisseur continu-continu délivre au convertisseur continu-continu auxiliaire la première tension issue de la batterie haute tension de manière à alimenter la batterie basse tension.

Avantageusement, le convertisseur continu-continu et le convertisseur continu-continu auxiliaire comprennent respectivement des interrupteurs configurés pour contrôler une énergie électrique transmise respectivement par ledit convertisseur continu-continu et par ledit convertisseur continu-continu auxiliaire. Dès lors, dans le deuxième mode de fonctionnement, les interrupteurs du convertisseur continu-continu auxiliaire fonctionnent avec un rapport cyclique constant et les interrupteurs du convertisseur continu-continu fonctionnent avec un rapport cyclique variable de manière à contrôler la tension transmise par le convertisseur continu-continu auxiliaire à la batterie basse tension.

Selon un mode de réalisation, le système électrique comprend un premier interrupteur connecté entre une borne d'entrée haute de la batterie haute tension et une deuxième borne d'interface haute du convertisseur continu-continu, et un deuxième interrupteur connecté entre une borne d'entrée basse de la batterie haute tension et une deuxième borne d'interface basse du convertisseur continu-continu, et ledit système électrique est configuré pour que, dans le deuxième mode de fonctionnement, les premier et deuxième interrupteurs sont fermés, de sorte qu'une troisième haute tension, aux bornes de la batterie haute tension, est imposée aux deuxièmes bornes d'interface du convertisseur continu-continu.

Avantageusement, les premières bornes d'interface du convertisseur continu-continu correspondent aux bornes connectées à l'entrée du convertisseur continu-continu isolé, et les deuxièmes bornes d'interface du convertisseur continu-continu correspondent aux bornes connectées à la sortie du redresseur.

Avantageusement, dans le premier mode de fonctionnement, le convertisseur continu-continu auxiliaire est en outre configuré pour convertir une tension délivrée par le convertisseur continu-continu à partir du réseau d'alimentation électrique externe alternatif en une tension destinée à alimenter la batterie basse tension.

Avantageusement, les premières bornes d'interface du convertisseur continu-continu correspondent aux bornes connectées à la sortie du redresseur, et les deuxièmes bornes d'interface du convertisseur continu-continu correspondent aux bornes connectées à l'entrée du convertisseur continu-continu isolé.

Avantageusement, dans le premier mode de fonctionnement, les premier et deuxième interrupteurs sont ouverts, de sorte que le convertisseur continu-continu délivre une tension à la batterie haute tension via ledit convertisseur continu-continu isolé.

Selon un mode de réalisation, les premier et deuxième interrupteurs sont des relais électromécaniques ou des interrupteurs semiconducteurs.

Selon le mode de réalisation choisi, le convertisseur continu-continu est de type élévateur ou de type abaisseur-élévateur.

Selon un mode de réalisation, le système électrique comprend des moyens de filtrage connectés en entrée du redresseur, destiné à filtrer la tension délivrée par le réseau d'alimentation électrique externe alternatif et à délivrer une tension filtrée au redresseur.

Selon un mode de réalisation, les interrupteurs du convertisseur continu-continu sont configurés pour que, dans le premier mode de fonctionnement, le convertisseur continu-continu délivre une première tension en fonction du besoin en tension de la batterie haute tension.

Selon un mode de réalisation, les interrupteurs du convertisseur continu-continu sont configurés pour que, dans le deuxième mode de fonctionnement, le convertisseur continu-continu délivre une première tension adaptée en fonction du besoin en tension de la batterie basse tension.

Selon un mode de réalisation, le système électrique comprend des moyens de détermination du besoin en tension de la batterie basse tension.

Selon un mode de réalisation, le système électrique comprend également des moyens de détermination du besoin en tension de la batterie haute tension.

### DESCRIPTION DES FIGURES

L'invention sera mieux comprise à la lecture de la description qui va suivre, donnée uniquement à titre d'exemple, et se référant aux dessins annexés sui représentent :
- la figure 1, le schéma bloc fonctionnel d'un système OBC selon l'état de l'art;
- la figure 2, le schéma bloc fonctionnel d'un système OBC selon invention ;
- la figure 3, le schéma électronique simplifié d'un premier exemple de réalisation d'un système OBC conforme à la présente invention ;
- la figure 4, le schéma électronique simplifié d'un deuxième exemple de réalisation d'un système OBC conforme à la présente invention.

### DESCRIPTION DETAILLEE DE L'INVENTION

Il est rappelé que la présente invention est décrite ci-après à l'aide de différents modes de réalisation non limitatifs et est susceptible d'être mise en œuvre dans des variantes à la portée de l'homme du métier, également visées par la présente invention.

La figure 1 représente un schéma bloc fonctionnel d'un système OBC de l'état de l'art. Un tel système OBC est chargé d'alimenter une batterie haute tension HV1, typiquement dédiée à la propulsion d'un véhicule électrique ou hybride, et une batterie basse tension LV1 assurant l'alimentation d'équipements électriques dudit véhicule.

En référence à la figure 1, pour l'alimentation du réseau d'alimentation électrique haute tension du véhicule, soit pour la charge de la batterie haute tension HV1, le système OBC représenté comprend un convertisseur alternatif-continu comportant un redresseur RD recevant le courant issu d'un réseau électrique externe alternatif G1, tel qu'un réseau d'alimentation électrique alternatif domestique, ledit redresseur RD délivrant une tension redressée à un convertisseur de tension faisant fonction de convertisseur PFC (PFC1 sur la figure 1) assurant la régulation de ladite tension pour ensuite, via un convertisseur continu-continu (DC11 sur la figure 1) isolé galvaniquement, alimenter la batterie haute tension HV1.

Toujours en référence à la figure 1, pour l'alimentation du réseau d'alimentation électrique basse tension du véhicule, soit pour la charge de la batterie basse tension LV1, le système OBC représenté comporte un pré-régulateur PR1 connecté à la batterie haute tension HV1, la tension délivrée par le pré-régulateur PR1 à partir de la tension aux bornes de la batterie haute tension HV1 étant destinée, via un convertisseur continu-continu auxiliaire dédié (DC12 sur la figure 1) isolé galvaniquement, à alimenter la batterie basse tension LV1.

En référence à la figure 2, pour améliorer cette architecture en termes de compacité, la présente invention propose l'utilisation commune du convertisseur de tension DC faisant fonction de convertisseur PFC, à la fois pour le mode de fonctionnement dans lequel la batterie haute tension HV2 est en charge et pour le mode de fonctionnement dans lequel la batterie haute tension HV2, n'étant pas en charge, délivre une tension en vue de l'alimentation de la batterie basse tension LV2.

Lorsque la batterie haute tension HV2 est en charge, le convertisseur de tension DC assure une fonction de convertisseur PFC, de façon standard, au sein d'un convertisseur alternatif-continu, de façon à assurer la régulation de la tension issue du redresseur RD pour ensuite, via un convertisseur continu-continu DC21 isolé galvaniquement, alimenter la batterie haute tension HV2.

Lorsque la batterie haute tension HV2 n'est pas en charge, elle participe au chargement de la batterie basse tension LV2. Dans ce deuxième mode de fonctionnement, le convertisseur de tension DC n'assure plus sa fonction de convertisseur PFC. Le convertisseur DC assure alors la fonction de pré-régulateur pour ladite batterie basse tension LV2, la batterie haute tension HV2 n'étant pas en charge et le système OBC n'étant pas connecté au réseau électrique externe alternatif G2. Dans ce mode de fonctionnement, la tension aux bornes de la batterie haute tension HV2 est reliée aux bornes d'entrée du convertisseur DC via un jeu d'interrupteur R. Ledit convertisseur DC délivre une tension régulée au convertisseur continu-continu auxiliaire DC22, isolée galvaniquement, du réseau d'alimentation basse tension, en vue d'assurer la charge de la batterie basse tension LV2.

Le convertisseur DC en tant que pré-régulateur transforme ainsi la tension élevée issue de batterie haute tension HV2 en tension régulée destinée au réseau d'alimentation basse tension, c'est-à-dire en tension destinée à charger la batterie basse tension LV2, via un convertisseur continu-continu auxiliaire DC22 transformant la haute tension délivrée par le convertisseur DC en une tension plus faible destinée au réseau d'alimentation basse tension.

Grâce à l'architecture du système OBC selon l'invention, il n'est plus nécessaire de recourir à un pré-régulateur dédié à la fonction de charge de la batterie basse tension LV2, le convertisseur DC assurant cette fonction lorsque la batterie haute tension HV2 n'est pas en charge.

De ce fait, dans le mode de fonctionnement dans lequel le système OBC est connecté au réseau électrique externe alternatif G2 en vue de charger la batterie haute tension HV2, le convertisseur DC est commandé de façon à délivrer une haute tension déterminée en vue d'optimiser la charge de la batterie haute tension HV2.

Dans le mode de fonctionnement dans lequel le système OBC, généralement non connecté au réseau électrique externe alternatif G2, la batterie haute tension HV2 n'étant pas en charge, assure la charge de la batterie basse tension LV2, le convertisseur DC est commandé de façon à délivrer une tension au convertisseur continu-continu auxiliaire DC22 relié à la batterie basse tension LV2. Le convertisseur DC reçoit en entrée la tension prélevée aux bornes de la batterie haute tension HV2 et régule ladite tension en fonction du besoin en tension déterminé pour la batterie basse tension LV2.

Il est à noter que, selon deux modes de réalisation prévus, le convertisseur DC est de type élévateur (« boost » en anglais) ou de type abaisseur-élévateur (« buck boost » en anglais). Le convertisseur « élévateur » est un convertisseur formant une alimentation à découpage, élévatrice de tension, tandis que le convertisseur « abaisseur-élévateur » est un convertisseur formant une alimentation à découpage apte à augmenter ou à diminuer la valeur d'une tension continue.

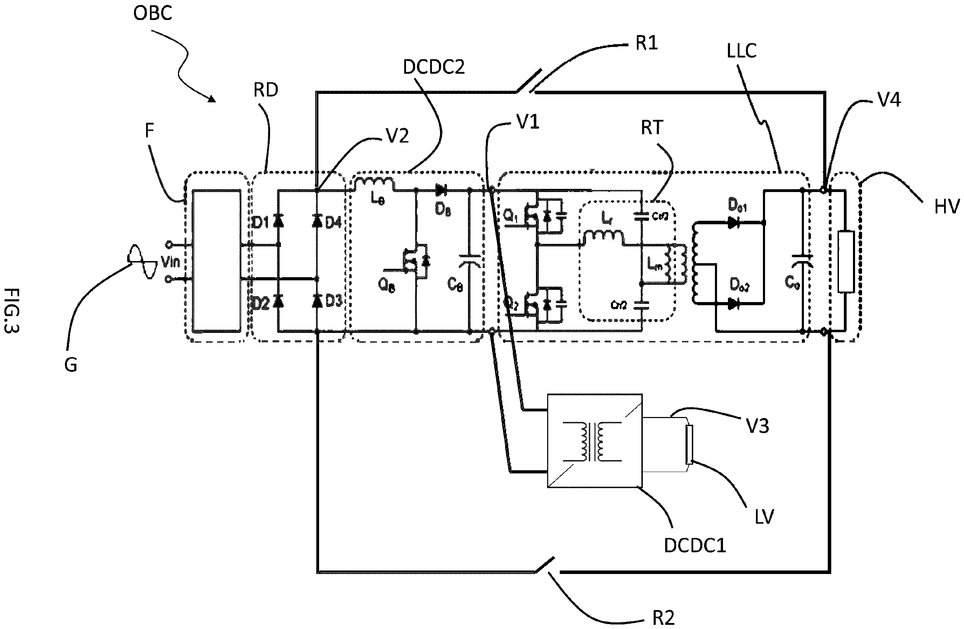

La figure 3 montre un schéma électrique simplifié d'un exemple de réalisation d'un système OBC selon l'invention. Le système OBC représenté comprend une succession d'étages, comme cela est connu. D'abord, ledit système OBC comprend un redresseur RD formé par les diodes D1, D2, D3, D4. Ensuite, le convertisseur continu-continu DCDC2 comprend une inductance LB, d'un interrupteur QB, d'une diode DB et d'une capacité CB entre ses bornes de sortie. Le convertisseur continu-continu isolé LLC comporte deux interrupteurs Q1, Q2, un circuit résonnant RT, composé de l'inductance Lr, des deux capacités Cr/2, de l'inductance Lm, des deux diodes Do1 et Do2 et d'une capacité Co entre ses bornes de sortie. Le système OBC, selon l'invention, est configuré pour charger la batterie haute tension HV et la batterie basse tension LV.

Le chargement de la batterie basse tension LV est réalisé à travers un convertisseur continu-continu auxiliaire DCDC1 comprenant de préférence des interrupteurs (non représentés) pour adapter la tension en vue de l'appliquer aux bornes de la batterie basse tension LV. Le convertisseur continu-continu auxiliaire DCDC1 est de préférence isolé galvaniquement.

D'un point de vue structurel, deux interrupteurs R1 et R2, et plus particulièrement deux relais, sont ajoutés et connectés, dans le mode de réalisation représenté à la figure 3, entre les bornes respectives de la batterie haute tension HV et de l'entrée du convertisseur DCDC2.

Grâce à ces interrupteurs R1 et R2, la tension aux bornes de la batterie haute tension HV est appliquée aux bornes d'interface situées entre le redresseur RD et le convertisseur DCDC2, lesdits interrupteurs étant fermés, lorsque la fonction de charge de la batterie haute tension HV n'est pas mise en œuvre.

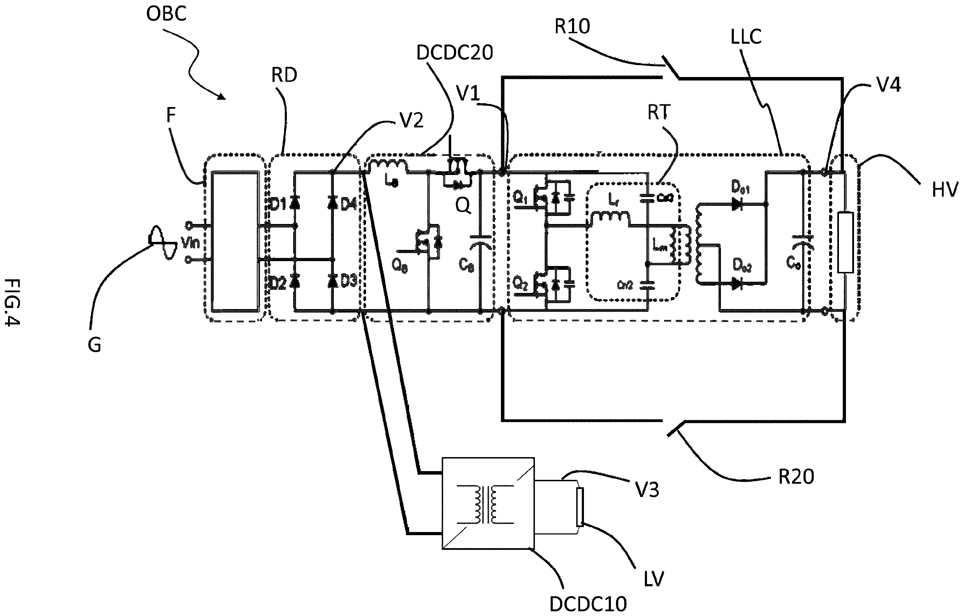

Sur la figure 3, comme sur la figure 4, on note V2 la tension d'entrée délivrée aux bornes d'interface situées entre le redresseur RD et le convertisseur DCDC2, V1 la première haute tension aux bornes d'interface situées entre le convertisseur DCDC2 et le convertisseur continu-continu isolé LLC, V3 la deuxième basse tension aux bornes de la batterie basse tension LV et V4 la troisième haute tension aux bornes de la batterie haute tension HV.

Ainsi, en référence à la figure 3, dans un premier mode de fonctionnement, la charge de la batterie haute tension HV est active, le système OBC étant connecté au réseau électrique externe alternatif G délivrant une tension sinusoïdale Vin. La tension Vin fournie par le réseau électrique externe alternatif G est filtrée par des moyens de filtrage F et redressée par un redresseur RD pour délivrer la tension d'entrée V2 entre ledit redresseur RD et le convertisseur DCDC2.

Dans le premier mode de fonctionnement, le convertisseur DCDC2 fait fonction de convertisseur PFC. En sortie du convertisseur DCDC2, la première haute tension V1 est régulée et constante, à une valeur comprise entre 100 V et 900 V, typiquement de l'ordre de 500 V, en fonction de la troisième haute tension V4 voulue aux bornes de la batterie haute tension HV. La première haute tension V1 est ensuite adaptée par un convertisseur continu-continu isolé LLC pour charger la batterie haute tension HV. En l'espèce, le convertisseur continu-continu mis en œuvre pour adapter la première haute tension V1 en vue de charger la batterie haute tension HV avec la tension V4 consiste en un demi-pont LLC résonant, comprenant un circuit résonant RT. Il s'agit là d'un exemple donné à titre d'exemple et ce convertisseur continu-continu isolé LLC pourrait très bien présenter une autre topologie.

Dans ce premier mode de fonctionnement, les relais R1 et R2 sont ouverts. L'entrée du convertisseur continu-continu auxiliaire DCDC1, connecté à la batterie basse tension LV, correspond à la première haute tension V1, constante, délivrée par le convertisseur DCDC2. Dans une variante, le convertisseur continu-continu auxiliaire DCDC1 convertit la première haute tension V1 en une deuxième basse tension V3, d'environ 12 V, 24 V, ou 48 V, typiquement, en fonction du facteur de transformation appliqué par ledit convertisseur continu-continu auxiliaire DCDC1.

Dans cette variante, la charge de la batterie basse tension LV s'effectue en mode dit « dégradé » dans la mesure où elle ne bénéficie pas d'une régulation dédiée. En effet, le convertisseur DCDC2 est contrôlé de façon à réguler la première haute tension V1 qu'il délivre en fonction du besoin en tension de ladite batterie haute tension HV, la deuxième basse tension V3 délivrée à la batterie basse tension LV n'est pas adaptée de façon optimale. Un tel mode « dégradé » d'alimentation de la batterie basse tension LV est considéré comme acceptable dans cette variante, dans lequel la batterie haute tension HV est en charge.

Ce fonctionnement dit « dégradé », dans le premier mode de fonctionnement, est néanmoins acceptable, comme indiqué précédemment, dans la mesure où, la batterie haute tension HV étant en charge, et le véhicule étant connecté au réseau électrique externe alternatif G, les besoins électriques des équipements connectés au réseau électrique basse tension, tels que le système multimédia, les moteurs de lève-vitre, etc., sont en pratique très réduits.

Dans un deuxième mode de fonctionnement, la charge de la batterie haute tension HV n'est pas active, le système OBC n'étant pas connecté au réseau électrique externe alternatif G.

Les relais R1 et R2 sont alors fermés et les bornes d'interface situées entre le redresseur RD et le convertisseur DCDC2 se trouvent connectées aux bornes de la batterie haute tension HV, de sorte que V2 = V4.

Selon un mode de réalisation, le convertisseur DCDC2 peut assurer, dans ce deuxième mode de fonctionnement, la fonction de pré-régulateur en vue de délivrer une première tension V1 régulée variable adaptée en fonction du besoin déterminé en tension aux bornes de la batterie basse tension LV. Le convertisseur continu-continu auxiliaire DCDC1 comprend alors des interrupteurs (non représentés). Lesdits interrupteurs, en coopération avec le(s) interrupteur(s) QB du convertisseur DCDC2, sont configurés, dans ce mode de réalisation, pour contrôler l'énergie électrique délivrée respectivement à chacun desdits convertisseurs.

Selon un mode de réalisation, des moyens de calcul sont par ailleurs prévus pour déterminer ledit besoin en tension de la batterie basse tension LV.

En pratique, l'entrée du convertisseur continu-continu auxiliaire DCDC1 correspond à la première haute tension V1 délivrée par le convertisseur DCDC2. Le convertisseur continu-continu auxiliaire DCDC1 adapte ladite première haute tension V1 en fonction du besoin en tension de la batterie basse tension LV, de façon à délivrer la deuxième basse tension V3 voulue. Le convertisseur continu-continu auxiliaire DCDC1 délivre par conséquent la deuxième basse tension V3 aux bornes de la batterie basse tension LV, en fonction de son facteur de transformation.

Dans une variante du deuxième mode de fonctionnement, à tire d'exemple non limitatif, les interrupteurs du convertisseur continu-continu auxiliaire DCDC1 fonctionnent avec un rapport cyclique constant et les interrupteurs QB du convertisseur DCDC2 fonctionnent avec un rapport cyclique variable de manière à contrôler la tension délivrée par le convertisseur continu-continu auxiliaire DCDC1 à la batterie basse tension LV. Le convertisseur continu-continu auxiliaire DCDC1 peut ainsi présenter un facteur de transformation constant, entre la tension reçue en entrée, à savoir la première tension V1 issue du convertisseur continu-continu auxiliaire DCDC1, et la deuxième basse tension V3 délivrée, de façon à fonctionner à 50% de ses capacités en termes de rapport cyclique, et bénéficier d'une sortie très basse en tension. Pour adapter la deuxième basse tension V3 au besoin de la batterie basse tension LV, le convertisseur continu-continu auxiliaire DCDC1 peut alternativement présenter un rapport de transformation variable, bien que cela peut entraîner une augmentation substantielle des pertes.

La figure 4 montre un schéma électrique simplifié d'un second exemple de réalisation d'un système OBC selon l'invention.

Par rapport à l'exemple de la figure 3, le convertisseur continu-continu auxiliaire DCDC10 et les interrupteurs R10, R20, se présentant typiquement sous la forme de relais, sont connectés de façon inversée. En d'autres termes, le convertisseur continu-continu auxiliaire DCDC10 est relié, sur la figure 4, aux points de connexion auxquels sont reliés respectivement les relais R1 et R2 sur la figure 3 et, réciproquement, les relais R10, R20 sont reliés, sur la figure 4, aux points de connexion auxquels est relié le convertisseur continu-continu auxiliaire DCDC1 sur la figure 3.

Ainsi, le convertisseur continu-continu auxiliaire DCDC10 est connecté aux bornes respectives de la batterie basse tension LV et de l'entrée du convertisseur continu-continu DCDC20.

Les relais R10, R20 sont reliés aux bornes respectives de la batterie haute tension HV et de la sortie du convertisseur DCDC20, correspondant à l'entrée du convertisseur continu-continu isolé LLC.

D'autre part, la diode DB de la figure 3 est remplacée, sur la figure 4, par un interrupteur bidirectionnel Q qui peut être du même type que l'interrupteur QB.

Lorsque le système OBC est connecté au réseau électrique externe G et que la fonction de charge de la batterie haute tension HV est mise en œuvre, la tension d'entrée V2 est délivrée au convertisseur DCDC20 et correspond à la tension Vin redressée issue du réseau électrique externe. La charge de la batterie haute tension HV, via le convertisseur DCDC20, faisant fonction de convertisseur PFC, et le convertisseur continu-continu isolé LLC, et potentiellement celle de la batterie basse tension LV, en mode dit « dégradé », via le convertisseur continu-continu auxiliaire DCDC10, sont directement effectives.

Lorsque la fonction de charge de la batterie haute tension HV n'est pas mise en œuvre, grâce à la fermeture des interrupteurs R10 et R20, la troisième haute tension V4 aux bornes de la batterie haute tension HV est appliquée aux bornes d'interface situées entre le convertisseur DCDC20 et le convertisseur continu-continu isolé LLC, de sorte que V1 = V4. Par ailleurs, l'interrupteur bidirectionnel Q est commandé en commutation, complémentairement avec l'interrupteur QB, de façon à permettre le passage du courant depuis les bornes d'interface situés entre le convertisseur DCDC20 et le convertisseur continu-continu isolé LLC jusqu'aux bornes d'interface situées entre le redresseur RD et le convertisseur DCDC20. Le convertisseur DCDC20 fonctionne alors en mode abaisseur (« buck » en anglais).

La troisième haute tension V4 aux bornes de la batterie haute tension HV est ainsi acheminée via le convertisseur DCDC20 jusqu'aux bornes d'interface situées entre le redresseur RD et le convertisseur DCDC20, correspondant à la tension d'entrée V2, le convertisseur continu-continu auxiliaire DCDC10 alimentant la batterie basse tension LV étant connecté à ces mêmes bornes. Selon un mode de réalisation, le convertisseur DCDC20 abaisse la tension délivrée par la batterie haute tension HV de sorte que V2 < V4. Selon un mode de réalisation, le convertisseur DCDC20 assure en outre une fonction de pré-régulation pour fournir une tension stable au convertisseur DCDC10 délivrant la deuxième basse tension V3 pour charger la batterie basse tension LV. Autrement dit, le convertisseur DCDC20 fonctionne avec un rapport cyclique variable, alors que le convertisseur continu-continu auxiliaire DCDC10 fonctionne avec un rapport cyclique constant, par exemple 50%.

Dès lors, comme pour l'exemple de la figure 3, la batterie basse tension LV est chargée à partir de la tension délivrée par la batterie haute tension HV.

Pour la mise en œuvre de la présente invention, il est à noter que le convertisseur DC peut être de type « boost » ou « buck boost », et qu'il peut aussi bien être mono-cellule ou multi-cellules, entrelacé, réversible ou non. Dans le cas du deuxième exemple de réalisation, le convertisseur DCDC20 est en pratique de type « buck boost ». En particulier, le convertisseur DC est non isolé.

Notamment, les convertisseurs isolés peuvent être différents de ceux décrits ci-dessus. Par exemple, dans un convertisseur isolé, le circuit primaire et/ou le circuit secondaire pourrai(en)t comprendre chacun plusieurs bobines. Notamment, les convertisseurs isolés peuvent être similaires à ceux décrits dans la demande internationale de brevet WO2017/064220 A1

## Revendications

1. Système électrique, notamment destiné à être embarqué dans un véhicule électrique ou hybride, ledit système électrique comprenant :
un convertisseur alternatif-continu comportant un redresseur (RD) et un convertisseur continu-continu (DC, DCDC2, DCDC20),
un convertisseur continu-continu isolé (LLC) destiné à être relié à une batterie haute tension (HV), et
ledit système électrique étant configuré pour, dans un premier mode de fonctionnement, être connecté à un réseau d'alimentation électrique externe alternatif (G) pour charger la batterie haute tension (HV), ledit redresseur (RD) délivrant une tension redressée au convertisseur continu-continu (DC, DCDC2, DCDC20) à partir du courant alternatif reçu du réseau d'alimentation électrique externe alternatif (G), ledit convertisseur continu-continu (DC, DCDC2, DCDC20) étant relié à la batterie haute tension (HV) via le convertisseur continu-continu isolé (LLC)
ledit système électrique étant **caractérisé en ce que**
des premières bornes d'interface du convertisseur continu-continu (DC, DCDC2, DCDC20) sont destinées à être reliées à une batterie basse tension (LV), et **en ce que**
ledit système électrique est configuré pour que, dans un deuxième mode de fonctionnement, le système électrique étant déconnecté du réseau d'alimentation électrique externe alternatif (G), ledit convertisseur continu-continu (DC, DCDC2, DCDC20) délivre une première tension (V1, V2) issue de la batterie haute tension de manière à alimenter la batterie basse tension (LV).

2. Système électrique selon la revendication 1, comprenant :
un convertisseur continu-continu auxiliaire (DCDC1, DCDC10) destiné à être relié à la batterie basse tension (LV), et dont l'entrée est reliée aux premières bornes d'interface du convertisseur continu-continu (DC, DCDC2, DCDC20), et
dans lequel ledit système électrique est configuré pour que, dans le deuxième mode de fonctionnement, ledit convertisseur continu-continu (DC, DCDC2, DCDC20) délivre au convertisseur continu-continu auxiliaire (DCDC1, DCDC10) la première tension (V1, V2) issue de la batterie haute tension (HV) de manière à alimenter la batterie basse tension (LV).

3. Système électrique selon la revendication 2, dans lequel le convertisseur continu-continu (DC, DCDC2, DCDC20) et le convertisseur continu-continu auxiliaire (DCDC1, DCDC10) comprennent respectivement des interrupteurs (QB) configurés pour contrôler une énergie électrique transmise respectivement par ledit convertisseur continu-continu (DC, DCDC2, DCDC20) et par ledit convertisseur continu-continu auxiliaire (DCDC1, DCDC10),
dans lequel, dans le deuxième mode de fonctionnement, les interrupteurs du convertisseur continu-continu auxiliaire (DCDC1, DCDC10) fonctionnent avec un rapport cyclique constant et les interrupteurs du convertisseur continu-continu (DC, DCDC2, DCDC20) fonctionnent avec un rapport cyclique variable de manière à contrôler la tension délivrée par le convertisseur continu-continu auxiliaire (DCDC1, DCDC10) à la batterie basse tension LV.

4. Système électrique selon l'une des revendications précédentes, dans lequel le système électrique comprend un premier interrupteur (R1, R10) connecté entre une borne d'entrée haute de la batterie haute tension (HV) et une deuxième borne d'interface haute du convertisseur continu-continu (DCDC2, DCDC20), et un deuxième interrupteur (R2, R20) connecté entre une borne d'entrée basse de la batterie haute tension (HV) et une deuxième borne d'interface basse du convertisseur continu-continu (DCDC2, DCDC20), et dans lequel ledit système électrique est configuré pour que, dans le deuxième mode de fonctionnement, les premier et deuxième interrupteurs (R1, R2) sont fermés, de sorte qu'une troisième tension (V4), aux bornes de la batterie haute tension (HV), est imposée aux deuxièmes bornes d'interface du convertisseur continu-continu (DCDC2, DCDC20).

5. Système électrique selon la revendication 4, dans lequel les premières bornes d'interface du convertisseur continu-continu (DCDC2) correspondent aux bornes connectées à l'entrée du convertisseur continu-continu isolé (LLC), et les deuxièmes bornes d'interface du convertisseur continu-continu (DCDC2) correspondent aux bornes connectées à la sortie du redresseur (RD).

6. Système électrique selon la revendication 5, dans lequel, dans le premier mode de fonctionnement, le convertisseur continu-continu auxiliaire (DCDC1, DCDC10) est en outre configuré pour convertir une tension (V1,V2) délivrée par le convertisseur continu-continu (DCDC2) à partir du réseau d'alimentation électrique externe alternatif (G) en une tension (V3) destinée à alimenter la batterie basse tension (LV).

7. Système électrique selon la revendication 4, dans lequel les premières bornes d'interface du convertisseur continu-continu (DCDC20) correspondent aux bornes connectées à la sortie du redresseur (RD), et les deuxièmes bornes d'interface du convertisseur continu-continu (DCDC20) correspondent aux bornes connectées à l'entrée du convertisseur continu-continu isolé (LLC).

8. Système électrique selon l'une des revendications 4 à 7, dans lequel dans le premier mode de fonctionnement, les premier (R1, R10) et deuxième (R2, R20) interrupteurs sont ouverts, de sorte que le convertisseur continu-continu (DCDC2, DCDC20) délivre une tension (V4) à la batterie haute tension (HV) via ledit convertisseur continu-continu isolé (LLC)

9. Système électrique selon l'une des revendications 5 à 8, dans lequel les premier et deuxième interrupteurs (R1, R2) sont des relais électromécaniques ou des interrupteurs semiconducteurs.

10. Système électrique selon l'une des revendications précédentes, dans lequel le convertisseur continu-continu (DCDC2, DCDC20) est de type élévateur ou de type abaisseur-élévateur.

## Patentansprüche

1. Elektrisches System, das insbesondere für den Einbau in ein Elektro- oder Hybridfahrzeug bestimmt ist, wobei das elektrische System umfasst:
einen Wechselstrom-Gleichstrom-Umrichter, aufweisend einen Gleichrichter (RD) und einen Gleichstrom-Gleichstrom-Umrichter (DC, DCDC2, DCDC20),
einen isolierten Gleichstrom-Gleichstrom-Umrichter (LLC), der bestimmt ist, mit einer Hochspannungsbatterie (HV) verbunden zu sein, und
wobei das elektrische System ausgelegt ist, um in einem ersten Betriebsmodus an ein externes Wechselstrom-Versorgungsnetz (G) angeschlossen zu sein, um die Hochspannungsbatterie (HV) zu laden, wobei der Gleichrichter (RD) dem Gleichstrom-Gleichstrom-Umrichter (DC, DCDC2, DCDC20) eine gleichgerichtete Spannung ab dem von dem externen Wechselstrom-Versorgungsnetz (G) empfangenen Wechselstrom bereitstellt, wobei der Gleichstrom-Gleichstrom-Umrichter (DC, DCDC2, DCDC20) mit der Hochspannungsbatterie (HV) über den isolierten Gleichstrom-Gleichstrom-Umrichter (LLC) verbunden ist,
wobei das elektrische System **dadurch gekennzeichnet ist, dass**
erste Schnittstellenklemmen des Gleichstrom-Gleichstrom-Umrichters (DC, DCDC2, DCDC20) bestimmt sind, mit einer Niederspannungsbatterie (LV) verbunden zu sein, und dass
das elektrische System ausgelegt ist, damit, wobei in einem zweiten Betriebsmodus das elektrische System von dem externen Wechselstrom-Versorgungsnetz (G) getrennt ist, der Gleichstrom-Gleichstrom-Umrichter (DC, DCDC2, DCDC20) eine erste Spannung (V1, V2) bereitstellt, die von der Hochspannungsbatterie ausgeht, so dass die Niederspannungsbatterie (LV) versorgt wird.

2. Elektrisches System nach Anspruch 1, umfassend:
Einen Hilfs-Gleichstrom-Gleichstrom-Umrichter (DCDC1, DCDC10), der bestimmt ist, mit der Niederspannungsbatterie (LV) verbunden zu sein, und dessen Eingang mit den ersten Schnittstellenklemmen des Gleichstrom-Gleichstrom-Umrichters (DC, DCDC2, DCDC20) verbunden ist, und
wobei das elektrische System ausgelegt ist, damit im zweiten Betriebsmodus der Gleichstrom-Gleichstrom-Umrichter (DC, DCDC2, DCDC20) dem Hilfs-Gleichstrom-Gleichstrom-Umrichter (DCDC1, DCDC10) die erste Spannung (V1, V2) bereitstellt, die von der Hochspannungsbatterie (HV) ausgeht, so dass die Niederspannungsbatterie (LV) versorgt wird.

3. Elektrisches System nach Anspruch 2, wobei der Gleichstrom-Gleichstrom-Umrichter (DC, DCDC2, DCDC20) und der Hilfs-Gleichstrom-Gleichstrom-Umrichter (DCDC1, DCDC10) jeweils Schalter (QB) umfassen, die ausgelegt sind, um eine elektrische Energie zu steuern, die jeweils von dem Gleichstrom-Gleichstrom-Umrichter (DC, DCDC2, DCDC20) und von dem Hilfs-Gleichstrom-Gleichstrom-Umrichter (DCDC1, DCDC10) übertragen wird,
wobei im zweiten Betriebsmodus die Schalter des Hilfs-Gleichstrom-Gleichstrom-Umrichters (DCDC1, DCDC10) mit einem konstanten zyklischen Verhältnis arbeiten und die Schalter des Gleichstrom-Gleichstrom-Umrichter (DC, DCDC2, DCDC20) mit einem variablen zyklischen Verhältnis arbeiten, so dass die von dem Hilfs-Gleichstrom-Gleichstrom-Umrichter (DCDC1, DCDC10) der Niederspannungsbatterie LV bereitgestellte Spannung gesteuert wird.

4. Elektrisches System nach einem der vorangehenden Ansprüche, wobei das elektrische System einen ersten Schalter (R1, R10) umfasst, der zwischen einer hohen Eingangsklemme der Hochspannungsbatterie (HV) und einer zweiten hohen Schnittstellenklemme des Gleichstrom-Gleichstrom-Umrichters (DCDC2, DCDC20) angeschlossen ist, und einen zweiten Schalter (R2, R20), der zwischen einer niedrigen Eingangsklemme der Hochspannungsbatterie (HV) und einer zweiten niedrigen Schnittstellenklemme des Gleichstrom-Gleichstrom-Umrichters (DCDC2, DCDC20) angeschlossen ist, und wobei das elektrische System ausgelegt ist, damit im zweiten Betriebsmodus der erste und zweite Schalter (R1, R2) geschlossen sind, so dass eine dritte Spannung (V4) an den Klemmen der Hochspannungsbatterie (HV) den zweiten Schnittstellenklemmen des Gleichstrom-Gleichstrom-Umrichters (DCDC2, DCDC20) auferlegt wird.

5. Elektrisches System nach Anspruch 4, wobei die ersten Schnittstellenklemmen des Gleichstrom-Gleichstrom-Umrichters (DCDC2) den Klemmen entsprechen, die an den Eingang des isolierten Gleichstrom-Gleichstrom-Umrichters (LLC) angeschlossen sind, und die zweiten Schnittstellenklemmen des Gleichstrom-Gleichstrom-Umrichters (DCDC2) den Klemmen entsprechen, die an den Ausgang des Gleichrichters (RD) angeschlossen sind.

6. Elektrisches System nach Anspruch 5, wobei im ersten Betriebsmodus der Hilfs-Gleichstrom-Gleichstrom-Umrichter (DCDC1, DCDC10) ferner ausgelegt ist, um eine Spannung (V1, V2), die von dem Gleichstrom-Gleichstrom-Umrichter (DCDC2) ab dem externen Wechselstrom-Versorgungsnetz (G) bereitgestellt wird, in einem Spannung (V3) umzuwandeln, die bestimmt ist, die Niederspannungsbatterie (LV) zu versorgen.

7. Elektrisches System nach Anspruch 4, wobei die ersten Schnittstellenklemmen des Gleichstrom-Gleichstrom-Umrichters (DCDC20) den Klemmen entsprechen, die an den Ausgang des Gleichrichters (RD) angeschlossen sind, und die zweiten Schnittstellenklemmen des Gleichstrom-Gleichstrom-Umrichters (DCDC20) den Klemmen entsprechen, die an den Eingang des isolierten Gleichstrom-Gleichstrom-Umrichters (LLC) angeschlossen sind.

8. Elektrisches System nach einem der Ansprüche 4 bis 7, wobei im ersten Betriebsmodus der erste (R1, R10) und zweite (R2, R20) Schalter geöffnet sind, so dass der Gleichstrom-Gleichstrom-Umrichter (DCDC2, DCDC20) der Hochspannungsbatterie (HV) über den isolierten Gleichstrom-Gleichstrom-Umrichter (LLC) eine Spannung (V4) bereitstellt.

9. Elektrisches System nach einem der Ansprüche 5 bis 8, wobei der erste und zweite Schalter (R1, R2) elektromechanische Relais oder Halbleiterschalter sind.

10. Elektrisches System nach einem der vorangehenden Ansprüche, wobei der Gleichstrom-Gleichstrom-Umrichter (DCDC2, DCDC20) vom Typ Aufwärts oder vom Typ Abwärts-Aufwärts ist.

## Claims

1. Electrical system, in particular designed to be installed on board an electric or hybrid vehicle, wherein said electrical system comprises:
an AC-to-DC converter that comprises a rectifier (RD) and a DC-to-DC converter (DC, DCDC2, DCDC20),
an isolated DC-to-DC converter (LLC) connected to a high voltage battery (HV), and
wherein said electrical system is configured, in a first operating mode, to be connected to an external alternating electricity grid (G) to charge the high voltage battery (HV), and wherein said rectifier (RD) provided a rectified voltage to the DC-to-DC converter (DC, DCDC2, DCDC20), from the alternating current received from the external alternating electricity grid (G), and wherein said DC-to-DC converter is connected to the high voltage battery (HV) through the isolated DC-to-DC converter (LLC)
said electrical system is **characterised in that**
first interface terminals of the DC-to-DC converter (DC, DCDC2, DCDC20) are designed to be connected to a low voltage battery (LV), and **in that**
said electrical system is configured so that, in a second operating mode, when the electrical system is disconnected from the external alternating electricity grid (G), said DC-to-DC converter (DC, DCDC2, DCDC20) provides an initial voltage (V1, V2) from the high voltage battery to power the low voltage battery (LV).

2. Electrical system according to claim 1 and comprising
an auxiliary DC-to-DC converter (DCDC1, DCDC10) connected to the low voltage battery, and featuring one input connected to the first interface terminals of the DC-to-DC converter (DC, DCDC2, DCDC20), and
where said electrical system is configured so that, in a second operating mode, said DC-to-DC converter (DC, DCDC2, DCDC20) provides the auxiliary DC-to-DC converter (DCDC1, DCDC10) with the initial voltage (V1, V2) from the high voltage battery (HV) for the purpose of powering the low voltage battery (LV).

3. Electrical system according to claim 2 in which the DC-to-DC converter (DC, DCDC2, DCDC20) and the auxiliary DC-to-DC converter (DCDC1, DCDC10) respectively comprise switches (QB) configured to control the electrical power supplied respectively by said DC-to-DC converter (DC, DCDC2, DCDC20) and by said auxiliary DC-to-DC converter (DCDC1, DCDC10),
in which, in a second operating mode, the switches of the auxiliary DC-to-DC converter (DCDC1, DCDC10) work on a constant duty cycle, and the switches of the DC-to-DC converter (DC, DCDC2, DCDC20) work on a variable duty cycle, so as to control the voltage supplied by the auxiliary DC-to-DC converter (DCDC1, DCDC10) to the low voltage battery LV.

4. Electrical system according to one of the previous claims, in which the electrical system comprises a first switch (R, R10) connected between a high input terminal of the high voltage battery (HV) and a second high interface terminal of the DC-to-DC converter (DCDC20), and a second switch (R2, R20) connected between a low input terminal of the low voltage battery (LV) and a low second interface terminal of the DC-to-DC converter (DCDC2, DCDC20), and said electrical system is configured so that, in the second operating mode, the first and second switches (R1,R2) are closed, thereby ensuring that a third voltage (V4), at the terminals of the high voltage battery (HV), is imposed on the second interface terminals of the DC-to-DC converter (DCDC2, DCDC20).

5. Electrical system according to claim 4, in which the first interface terminals of the DC-to-DC converter (DCDC2) correspond to the terminals connected at the input of the isolated DC-to-DC converter (LLC), and the second interface terminals of the DC-to-DC converter (DCDC2) correspond to the terminals connected at the output of the rectifier (RD).

6. Electrical system according to claim 5, in which, according to a first operating mode, the auxiliary DC-to-DC converter (DCDC1, DCDC10) is also configured to convert the voltage (V1, V2) supplied by the DC-to-DC converter(DCDC2) from the external alternating electricity grid (G) to a voltage (V3) that can be used to power the low voltage battery (LV).

7. Electrical system according to claim 4, in which the first interface terminals of the DC-to-DC converter (DCDC20) correspond to the terminals connected at the output of the rectifier (RD), and the second interface terminals of the DC-to-DC converter (DCDC20) correspond to the terminals connected at the input of the isolated DC-to-DC converter (LLC).

8. Electrical system according to any of the claims 4 to 7, in which according to a first operating mode, the first (R1, R10) and second (R2, R20) switches are open, so as to enable the DC-to-DC converter (DCDC2, DCDC20) to provide voltage (V4) to the high voltage battery (HV) through said isolated DC-to-DC converter (LLC).

9. Electrical system according to any of the claims 5 to 8 in which the first and second switches (R1, R2) are electromechanical relays or semiconductor switches.

10. Electrical system according to any of the previous claims, in which the DC-to-DC converter (DCDC2, DCDC20) is of the boost type or of the buck-boost type.
